# EUROPÄISCHE PATENTSCHRIFT

(11) **EP 3 250 093 B1**
(45) Veröffentlichungstag und Bekanntmachung des Hinweises auf die Patenterteilung: **12.08.2020**
(21) Anmeldenummer: 16707372.5
(22) Anmeldetag: 29.01.2016
(51) Int. Cl.: A47J 31/44

(54) **HEISSGETRÄNKEAUTOMAT MIT SENSOR**
HOT DRINK MACHINE WITH SENSOR
AUTOMATE DE BOISSONS CHAUDES DOTÉ DE CAPTEUR

(30) Priorität: 30.01.2015 EP 15405008
(43) Veröffentlichungstag der Anmeldung: 06.12.2017
(73) Patentinhaber: JURA Elektroapparate AG, 4626 Niederbuchsiten (CH)
(72) Erfinder: REYHANLOO, Shahryar, 6405 Immensee (CH)
(74) Vertreter: EGLI-EUROPEAN PATENT ATTORNEYS
(86) Internationale Anmeldenummer: PCT/CH2016/000023
(87) Internationale Veröffentlichungsnummer: WO 2016/119072

(56) Entgegenhaltungen:
- EP-A1- 1 647 951
- EP-A1- 1 647 951
- EP-A1- 2 454 977
- EP-A1- 2 570 059
- EP-A1- 2 570 059
- EP-A1- 2 599 414
- EP-A1- 2 671 477
- DE-U1-202004 007 986
- DE-U1-202005 011 476
- DE-U1-202005 011 476
- US-B2- 8 056 468

## Beschreibung

Die vorliegende Erfindung betrifft einen Heissgetränkeautomaten, der einen ersten Heissgetränkeauslass sowie einen zweiten Heissgetränkeauslass aufweist. Der Heissgetränkeautomat weist ferner eine Trinkgefässablage auf, auf der Trinkgefässe, insbesondere Tassen oder Gläser, unterhalb der Heissgetränkeauslässe abstellbar sind derart, dass aus dem ersten und/oder zweiten Heissgetränkeauslass ein Heissgetränk in das Trinkgefäss ausgebbar ist. Dies wird insbesondere in den Stand der Technik Dokumenten DE 20 2004 007986 U1 und US 8 056 468 B2 offenbart.

Heissgetränkeautomaten und insbesondere Kaffeevollautomaten werden seit den 1980er Jahren immer beliebter, da sie die schnelle Zubereitung von Kaffeegetränken, Kakao, Teegetränken, etc. ermöglichen, ohne dass hierzu ein Nutzer aufwendige Bedienschritte durchführen müsste. Auch ist es möglich, Espresso, Cappuccino, Latte Macchiato, etc. herzustellen, unter anderem dadurch, dass moderne Kaffeevollautomaten oft über eine Einrichtung zum Milchaufschäumen verfügen.

Kaffeevollautomaten weisen zumeist zumindest einen Kaffeeauslass auf, aus dem Kaffee in ein Trinkgefäss ausgegeben werden kann. Darüber hinaus sind weitere Heissgetränkeauslässe, wie z. B. ein Cappuccinoauslass, über den Kaffee sowie (aufgeschäumte) Milch in ein Trinkgefäss ausgebbar sind, ein Milchschaumauslass, ein Heisswasserauslass, ein Kombiauslass, etc., denkbar und bei vielen Heissgetränkeautomaten realisiert. Unterhalb all dieser Heissgetränkeauslässe kann mindestens ein Trinkgefäss angeordnet werden, sodass das entsprechende Heissgetränk (Kaffee, Milch, heisses Wasser, etc.) aus dem Heissgetränkeauslass in das Trinkgefäss ausgebbar ist.

Bei den Trinkgefässen handelt es sich üblicherweise um Tassen aus Keramik oder Glas; allerdings sind auch andere Trinkgefässe wie z. B. Gläser denkbar. Die Trinkgefässauslässe können höhenverstellbar sein, um es zu ermöglichen, verschiedene Heissgetränke in verschiedene Trinkgefässe auszugeben.

Bekannte Heissgetränkeautomaten weisen somit mindestens zwei, oftmals mehr, Heissgetränkeauslässe auf, die jeweils geeignet sind, Heissgetränke verschiedener Art in darunter platzierte Trinkgefässe auszugeben. Bei bekannten Heissgetränkeautomaten ist unterhalb der Heissgetränkeauslässe eine Trinkgefässablage vorgesehen, auf der Trinkgefässe platziert werden können. Die Heissgetränkeauslässe befinden sich oberhalb der Trinkgefässablage, sodass ein Nutzer ein Trinkgefäss unterhalb einer der Trinkgefässauslässe platzieren kann und dann über ein Wahlrad, Display oder dergleichen die Art des Heissgetränks auswählt, welches in das Trinkgefäss ausgegeben werden soll.

Ein Nutzer muss somit wissen, unter welchem Heissgetränkeauslass er das Trinkgefäss platzieren muss, um zu verhindern, dass ein Heissgetränk an einem Heissgetränkeauslass ausgegeben wird, unter dem sich gar kein Trinkgefäss befindet. Ausserdem muss ein Nutzer ein Heissgetränk aus einer Vielzahl von möglichen Heissgetränken auswählen, von denen gegebenenfalls nur eine relativ geringe Anzahl von dem Heissgetränkeauslass ausgebbar ist, unterhalb dessen der Nutzer ein Trinkgefäss platziert hat.

Insgesamt weisen bekannte Heissgetränkeautomaten somit den Nachteil auf, dass eine Vielzahl von Heissgetränken aus mindestens zwei Heissgetränkeauslässen ausgebbar sind und ein Nutzer sowohl wissen muss, unterhalb von welchem Heissgetränkeauslass er ein Trinkgefäss platzieren muss, um ein gewünschtes Heissgetränk zu bekommen, als auch aus der Vielzahl von Heissgetränken genau jenes auswählen muss, welches in das Trinkgefäss ausgegeben werden soll.

Der vorliegenden Erfindung liegt somit die Aufgabe zugrunde, einen Heissgetränkeautomat der eingangs genannten Art dahingehend weiterzubilden, dass ein Heissgetränkeautomat einfacher zu bedienen und nutzerfreundlicher ist.

Des Weiteren soll ein entsprechendes Verfahren zum Betreiben eines solchen Heissgetränkeautomaten angegeben werden.

Im Hinblick auf den Heissgetränkeautomat wird die der Erfindung zugrunde liegende Aufgabe erfindungsgemäss durch den Gegenstand des Patentanspruchs 1 gelöst. Im Hinblick auf das Verfahren zum Betreiben des Heissgetränkeautomaten wird die der Erfindung zugrunde liegende Aufgabe durch den Gegenstand des Patentanspruchs 14 gelöst.

Demnach wird insbesondere ein Heissgetränkeautomat zum Ausgeben einer Mehrzahl verschiedener Heissgetränke vorgeschlagen, welcher aufweist: einen ersten Heissgetränkeauslass; einen zweiten Heissgetränkeauslass; eine Trinkgefässablage, auf der mindestens ein Trinkgefäss unter dem ersten Heissgetränkeauslass und/oder dem zweiten Heissgetränkeauslass derart abstellbar ist, dass aus dem ersten und/oder dem zweiten Heissgetränkeauslass ein Heissgetränk in das mindestens eine Trinkgefäss ausgebbar ist; eine Sensoreinheit mit mindestens einem Sensor, wobei der mindestens eine Sensor ausgebildet ist, zu detektieren, ob auf der Trinkgefässablage ein Trinkgefäss unter dem ersten Heissgetränkeauslass und/oder dem zweiten Heissgetränkeauslass abgestellt ist; eine Steuereinheit sowie eine Anzeigeeinrichtung.

Weiterhin sind der erste Heissgetränkeauslass und der zweite Heissgetränkeauslass derart ausgebildet, dass mindestens eines der Heissgetränke ausschliesslich aus dem ersten Heissgetränkeauslass ausgebbar ist und mindestens eines der Heissgetränke ausschliesslich aus dem zweiten Heissgetränkeauslass ausgebbar ist.

Der mindestens eine Sensor ist mit der Steuereinheit derart verbunden, dass die Steuereinheit eine Information darüber empfangen kann, ob der mindestens eine Sensor ein unter dem ersten Heissgetränkeauslass und/oder dem zweiten Heissgetränkeauslass abgestelltes Trinkgefäss detektiert hat.

Gemäss der Erfindung ist die Steuereinheit ausgebildet, die Anzeigeeinrichtung derart anzusteuern, dass die Anzeigeeinrichtung anzeigt: (i) mindestens ein aus dem ersten Heissgetränkeauslass ausgebbares Heissgetränk, falls der mindestens eine Sensor ein unter dem ersten Heissgetränkeauslass abgestelltes Trinkgefäss detektiert, und/oder (ii) mindestens ein aus dem zweiten Heissgetränkeauslass ausgebbares Heissgetränk, falls der mindestens eine Sensor ein unter dem zweiten Heissgetränkeauslass abgestelltes Trinkgefäss detektiert.

Die mit der Erfindung erzielbaren Vorteile liegen auf der Hand. Während bei herkömmlichen Heissgetränkeautomaten der Nutzer des Heissgetränkeautomats genau wissen muss, unter welchen Heissgetränkeauslass er ein Trinkgefäss platziert, da das von dem Nutzer gewählte Heissgetränk von einem bestimmten der Heissgetränkeauslässe ausgegeben wird, ist vorgesehen, dass der erfindungsgemässe Heissgetränkeautomat über eine Sensoreinheit mit mindestens einem Sensor verfügt, der detektiert, unterhalb welchen Heissgetränkeauslasses ein Trinkgefäss abgestellt wurde.

Die Anzeigeeinrichtung des erfindungsgemässen Heissgetränkeautomaten ermöglicht im Betrieb des Heissgetränkeautomaten eine Anzeige von Heissgetränken, welche von dem Heissgetränkeautomaten ausgegeben werden können. Somit erhält ein Benutzer eine Information über diejenigen Heissgetränke, welche zur Ausgabe aus dem Heissgetränkeautomaten bereitgestellt sind und von denen ein Benutzer zumindest ein Heissgetränk (oder gegebenenfalls mehrere Heissgetränke) auswählen kann, welches (oder welche) anschliessend von dem Heissgetränkeautomaten auszugeben ist (oder auszugeben sind).

Die Anzeigeeinrichtung des erfindungsgemässen Heissgetränkeautomaten kann "mindestens ein aus dem ersten Heissgetränkeauslass ausgebbares Heissgetränk" bzw. "mindestens ein aus dem zweiten Heissgetränkeauslass ausgebbares Heissgetränk" grundsätzlich auf unterschiedliche Weisen anzeigen. Als "Anzeige eines Heissgetränks" kann in diesem Zusammenhang jede von einem Benutzer wahrnehmbare Darstellung einer Information verstanden werden, welche es dem Benutzer ermöglicht, das jeweilige "Heissgetränk" eindeutig zu identifizieren, beispielsweise eine sichtbare Darstellung (z.B. Darstellungen mittels Schriftzeichen oder graphischer Elemente, bildliche Darstellungen, Anzeigen mittels an- und abschaltbarer Lichtquellen o.ä.), eine akustisch wahrnehmbare Darstellung oder eine auf andere Weise wahrnehmbare Darstellung.

Somit kann verhindert werden, dass ein Heissgetränk an einem Heissgetränkeauslass ausgegeben wird, unterhalb dessen gar kein Trinkgefäss abgestellt wurde. Die Nutzung eines Heissgetränkeautomats für einen Nutzer ist somit erheblich vereinfacht, da der Nutzer ein Trinkgefäss auf der Trinkgefässablage abstellen kann, ohne sich Gedanken darüber zu machen, ob ein Heissgetränk gegebenenfalls von einem Heissgetränkeauslass ausgegeben wird, unter dem gar kein Trinkgefäss positioniert bzw. abgestellt wurde. Vielmehr kann sich ein Nutzer sicher sein, dass nur von dem Heissgetränkeauslass ein Heissgetränk ausgegeben wird, unterhalb dessen er ein Trinkgefäss abgestellt hat.

Gemäss einem Aspekt der Erfindung ist vorgesehen, dass der mindestens eine Sensor mit der Steuereinheit signaltechnisch verbunden ist, wobei die Steuereinheit ausgebildet ist, die Anzeigeeinrichtung anzusteuern derart, dass die Anzeigeeinrichtung die Heissgetränke anzeigt, die von dem Heissgetränkeauslass ausgebbar sind, unterhalb dessen das Trinkgefäss abgestellt ist. Dies ist insbesondere vorgesehen, wenn ein Trinkgefäss unterhalb eines Heissgetränkeauslasses abgestellt ist und dies vom Sensor detektiert ist.

Vorteilhafterweise wird hierdurch erreicht, dass ein Nutzer nicht unter einer Vielzahl von Heissgetränken das Heissgetränk auswählen muss, welches aus dem Heissgetränkeauslass ausgebbar ist, unter dem das Trinkgefäss abgestellt ist, obschon nur ein Teil der Heissgetränke, die vom Heissgetränkeautomat ausgebbar sind, von eben diesem Heissgetränkeauslass ausgebbar sind, unter dem das Trinkgefäss abgestellt ist. Vielmehr zeigt der erfindungsgemässe Heissgetränkeautomat bzw. die Anzeigeeinrichtung des Heissaetränkeautomats dem Nutzer nur solche Heissgetränke an, die von dem Heissgetränkeauslass ausgebbar sind, unter dem sich ein Trinkgefäss befindet, welches von dem mindestens einen Sensor detektiert wurde.

Falls von einem Heissgetränkeauslass mehrere verschiedene Heissgetränke ausgebbar sind, dann könnte die Steuereinheit bzw. die Anzeigeeinrichtung derart ausgebildet sein, dass, sofern unter diesem Heissgetränkeauslass ein Trinkgefäss platziert ist, die Anzeigeeinrichtung alle aus diesem Heissgetränkeauslass ausgebbaren Heissgetränke anzeigt. Alternativ kann die Steuereinheit bzw. die Anzeigeeinrichtung derart ausgebildet sein, dass die Anzeigeeinrichtung in diesem Fall nicht alle aus diesem Heissgetränkeauslass ausgebbaren Heissgetränke gleichzeitig anzeigt, sondern nur eine Auswahl aus der Gesamtheit aller aus diesem Heissgetränkeauslass ausgebbaren Heissgetränke, welche Auswahl zumindest eines dieser Heissgetränke oder gegebenenfalls mehr als eines dieser Heissgetränk umfasst.

Vorstellbar ist beispielsweise, dass ein Trinkgefäss vom Nutzer unterhalb eines Kaffeeauslasses platziert bzw. abgestellt wird (auf der Trinkgefässablage). Von diesem Heissgetränkeauslass ist somit lediglich Kaffee oder eine direkte Kaffeevariante wie Espresso in das Trinkgefäss ausgebbar. Nicht in das Trinkgefäss ausgebbar ist in diesem Fall z. B. aufgeschäumte Milch oder heisses Wasser. Eine Anzeigeeinrichtung, beispielsweise ein Display wie ein berührungsempfindliches Display, würde in diesem Fall erfindungsgemäss dem Nutzer lediglich die Heissgetränke, d. h. in diesem Fall die Kaffeevariationen, anbieten, die von dem Kaffeeauslass tatsächlich ausgebbar sind. Konkret könnte in diesem Fall der Nutzer also aus einer Reihe von Kaffeevarianten wählen, nicht aber aufgeschäumte Milch, Cappuccino, heisses Wasser oder dergleichen wählen, da diese Heissgetränke nicht von dem Heissgetränkeauslass ausgebbar sind, unterhalb dessen der Nutzer ein Trinkgefäss abgestellt hat.

Entsprechendes gilt natürlich für den Fall, dass ein Nutzer ein Trinkgefäss unterhalb z. B. eines Heisswasserauslasses abstellt. In diesem Fall würde die Anzeigeeinrichtung dem Nutzer keine Kaffeevariationen zur Auswahl anbieten. Auch Kombiauslässe sind denkbar, die z. B. die Ausgabe von Kaffee und Milch, nicht aber von heissem Wasser ermöglichen. Auch sind andere Heissgetränke und andere entsprechende Heissgetränkeauslässe z. B. für Kakao o. ä. denkbar.

Die Steuereinheit kann als Prozessor ausgebildet sein, der vorzugsweise in den Heissgetränkeautomat integriert ist. Natürlich ist auch denkbar, dass die vom Sensor detektierte Information auf eine Steuereinheit übertragen wird, die nicht in dem Heissgetränkeautomat integriert ist. Denkbar hierbei ist z. B. eine WLAN Verbindung zu einem weiter entfernten Computer.

Der Begriff "signaltechnisch" verbunden, bedeutet, dass die vom Sensor generierte Information bzgl. des mindestens einen Trinkgefässes zu der Steuereinheit übertragbar ist. Hierbei ist eine herkömmliche Kabelverbindung denkbar oder aber eine Funkverbindung wie z. B. eine WLAN Verbindung. Die Steuereinheit ist elektrisch mit der Anzeigeeinrichtung verbunden, sodass die Steuereinheit, nachdem sie Information vom Sensor empfangen hat und diese Information verarbeitet hat, ein entsprechendes Signal an die Anzeigeeinrichtung übermitteln kann, sodass die Anzeigeeinrichtung hierauf, wie oben beschrieben, genau die Heissgetränke anzeigt, die von dem Heissgetränkeauslass ausgebbar sind, unterhalb dessen der Nutzer ein Trinkgefäss abgestellt hat.

Eine Ausführungsform des Heissgetränkeautomaten umfasst eine Eingabeeinrichtung zum Auswählen eines auszugebenden Heissgetränks, wobei als auszugebendes Heissgetränk ausschliesslich ein Heissgetränk auswählbar ist, welches von der Anzeigeeinrichtung angezeigt ist. Die Eingabeeinrichtung ermöglicht einem Benutzer des Heissgetränkeautomaten, dasjenige Heissgetränk bzw. gegebenenfalls diejenigen Heissgetränke auszuwählen, welches bzw. welche von dem Heissgetränkeautomaten auf Wunsch des Benutzers auszugeben ist bzw. sind. Die Eingabeeinrichtung ermöglicht zu diesem Zweck einem Benutzer eine Eingabe einer an die Steuereinheit gerichteten Information, welche ein vom Benutzer ausgewähltes und von dem Heissgetränkeautomaten auszugebendes Heissgetränk spezifiziert. Die Steuereinheit ist ausgebildet, nach der Eingabe einer derartigen Information den Heissgetränkeautomaten derart zu steuern, dass eine Ausgabe eines vom Benutzer ausgewählten Heissgetränks tatsächlich erfolgt.

Vorzugsweise dient die Anzeigeeinrichtung gleichzeitig als Eingabeeinrichtung, sodass dem Nutzer die von Heissgetränke angezeigt werden, die von dem Heissgetränkeauslass ausgebbar sind, unterhalb dessen er ein Trinkgefäss abgestellt hat, und die Anzeigeeinrichtung gleichzeitig die Auswahl eines der Heissgetränke durch den Nutzer ermöglicht. Hierzu kommt vorzugsweise ein berührungsempfindliches Display zum Einsatz. Andererseits kann die Auswahl eines Heissgetränks über eine andere Einrichtung als die Anzeigeeinrichtung erfolgen, z. B. über ein Wahlrad oder eine Tastatur.

Dadurch, dass von dem Sensor ermittelt wird, unterhalb welchen Heissgetränkeauslasses der Nutzer ein Trinkgefäss platziert hat, wird somit zum einen vermieden, dass ein Heissgetränk von einem Heissgetränkeauslass ausgegeben wird, unterhalb dessen kein Trinkgefäss abgestellt ist, da dies von der Steuereinheit unterbunden wird, und zum anderen die Anzeige von Heissgetränken für den Nutzer vereinfacht, da dem Nutzer nur die Heissgetränke von der Anzeigeeinrichtung angezeigt werden, die von dem Heissgetränkeauslass ausgebbar sind, unterhalb dessen vom Nutzer das Trinkgefäss auf die Trinkgefässablage abgestellt wurde.

Gemäss einer weiteren Ausführungsform des Heissgetränkeautomaten ist vorgesehen, dass der mindestens eine Sensor als Ultraschall-, Laserentfernungsmess-, PMD-, LIDAR-, induktiver oder kapazitativer Sensor ausgebildet ist.

Der Sensor ist insbesondere als Abstandsmesssensor ausgebildet, was ermöglicht, dass vom Sensor detektiert wird, ob ein Trinkgefäss unterhalb eines Heissgetränkeauslasses platziert wurde. Hierzu ist beispielsweise vorgesehen, dass der Sensor einen elektromagnetischen Puls, vorzugsweise in Gestalt eines Lichtpulses, eines Infrarotpulses oder eines Laserpulses aussendet in Richtung eines Ortes auf der Oberfläche der Trinkgefässablage, auf dem ein Trinkgefäss platziert wird, wenn es unterhalb einer der Trinkgefässauslässe platziert wird. Der elektromagnetische Puls wird von diesem Ort zur Quelle reflektiert und durch das Messen der Laufzeit kann auf die Distanz zwischen dem Sensor und der Position geschlossen werden. Wenn nun ein Trinkgefäss an diesem Ort platziert wird, verkürzt sich die Entfernung zwischen dem Sensor und der Position, da der elektromagnetische Puls die Position nicht mehr erreicht sondern vorher von dem Trinkgefäss reflektiert wird. Somit kann der Sensor durch die oben beschriebene Laufzeitmessung erkennen, dass ein Objekt auf dieser Position platziert wurde und/oder von welcher Art ein Objekt ist, welches auf dieser Position platziert wurde.

Denkbar hierbei ist es insbesondere, dass die Sensoreinrichtung wenigstens einen Sensor aufweist, mit welchem die Grösse, die Formgebung und/oder das Material des Trinkgefässes erfasst werden kann. Bei einer möglichen Realisierung einer derartigen Sensoreinrichtung weist diese beispielsweise wenigstens einen vorzugsweise optisch, induktiv oder kapazitiv arbeitenden Sensor auf, so dass zur Identifizierung des Trinkgefässes die Grösse, die Formgebung und/oder das Material des Trinkgefässes erfasst werden kann. Als Sensor kommen aber auch andere Detektortypen in Frage, wie beispielsweise induktiv arbeitende Sensoren, Lichttaster, Lichtvorhänge, Laserscanner, 3D-Laser, Kameras etc.

Auch ist denkbar, dass jedes Trinkgefäss und/oder Reinigungsgefäss ein mit dem Sensor erfassbares Identifizierungsmerkmal, wie etwa einen Identifizierungscode und/oder einen RFID-Chip, aufweist. Das von dem Sensor erfasste Identifizierungsmerkmal liefert dann den Hinweis auf die Art des Trinkgefässes.

Hierbei ist vorzugsweise vorgesehen, dass die Steuereinheit die detektierten Trinkgefässe Trinkgefässgruppen zuordnet, wobei die Trinkgefässe verschiedener Trinkgefässgruppen jeweils geeignet und/oder vorgesehen sind für verschiedene Arten von Heissgetränken. So könnte eine Gruppe beispielsweise aus Trinkgefässen bestehen, die geeignet und/oder vorgesehen sind für Latte Macchiato oder Cappuccino. Eine andere Gruppe könnte beispielsweise aus Trinkgefässen bestehen, die geeignet und/oder vorgesehen sind für Espresso. Hierdurch werden dem Nutzer nutzerfreundlich nur die Heissgetränke angezeigt, die geeignet sind für das Trinkgefäss, das der Nutzer auf der Trinkgefässablage abgestellt hat.

Natürlich sind andere Abstandsmessverfahren, z. B. über die Phasenverschiebung des elektromagnetischen Pulses oder dessen Modulation gegenüber dem ausgesandten Strahl oder auch Methoden wie die Lasertriangulation denkbar.

Der Sensor ist somit ausgelegt, die Distanz zwischen Sensor und Trinkgefäss unterhalb eines Heissgetränkeauslasses zu messen und so zu delektieren, ob ein Trinkgefäss unterhalb einer der Heissgetränkeauslässe platziert wurde sowie vorzugsweise die Art des Trinkgefässes zu detektieren. Hierdurch kann die dem Nutzer angezeigte Auswahl von Heissgetränken so angepasst werden, dass nur die für das Trinkgefäss geeignete Auswahl von Heissgetränken angezeigt wird. Beispielsweise ist denkbar, dass eine kleine Espressotasse unterhalb eines Cappuccino-Auslasses platziert wird. Dem Nutzer wird dann nur ein Heissgetränk angezeigt, das in die kleine Espressotasse passt.

Gemäss einer weiteren Ausführungsform des Heissgetränkeautomaten ist vorgesehen, dass der mindestens eine Sensor ausgebildet ist, zu detektieren, ob das Trinkgefäss als Reinigungsgefäss ausgebildet ist.

Vorteilhafter Weise kann der Sensor detektieren, ob das Trinkgefäss als ein Reinigungsgefäss ausgebildet ist, beispielsweise da das Reinigungsgefäss aus Metall ist oder einen Identifizierungscode aufweist. Dem Nutzer wird vorzugsweise auf der Anzeigeeinrichtung angezeigt, dass ein Reinigungsgefäss unterhalb einer der Heissgetränkeauslässe platziert wurde. Somit wird vermieden, dass ein Nutzer verschiedene Heissgetränke auf der Anzeigeeinrichtung angezeigt bekommt, obwohl er einen Reinigungsbetrieb des Heissgetränkeautomaten anstrebt.

Gemäss einer weiteren Ausführungsform des Heissgetränkeautomaten ist vorgesehen, dass die Steuereinheit ausgebildet ist, einen Reinigungsbetriebsmodus des Heissgetränkeautomaten zu starten, wenn von dem mindestens einen Sensor detektiert wird, dass ein Reinigungsgefäss auf der Trinkgefässablage unterhalb einer der Heissgetränkeauslässe abgestellt ist.

Vorteilhafterweise wird somit ein Reinigungsbetriebsmodus des Heissgetränkeautomaten ausgeführt, da der Sensor ein Reinigungsgefäss erkennen kann und die Steuereinheit, zu der diese Information übertragen wird, automatisch erkennt, dass ein Reinigungsbetriebsmodus gewünscht ist. Somit wird verhindert, dass dem Nutzer verschiedene Heissgetränke, z. B. Kaffeevariationen, auf der Anzeigeeinrichtung angezeigt werden, wenn ein Reinigungsgefäss auf der Trinkgefässablage unterhalb einer der Heissgetränkeauslässe platziert wird.

Denkbar ist auch, dass der Reinigungsbetriebsmodus des Heissgetränkeautomaten automatisch gestartet wird, wenn ein Reinigungsgefäss auf der Trinkgefässablage unterhalb einer der Heissgetränkeauslässe abgestellt wird, oder dem Nutzer lediglich auf der Anzeigeeinrichtung angezeigt wird, dass ein Reinigungsgefäss auf der Trinkgefässablage unterhalb einer der Heissgetränkeauslässe platziert wurde und der Nutzer auswählen kann, vorzugsweise auf der Anzeigeeinrichtung, ob ein Reinigungsbetriebsmodus des Heissgetränkeautomat durchgeführt werden soll.

Insgesamt wird verhindert, dass dem Nutzer unnötige Informationen angezeigt werden, insbesondere Heissgetränke, die zum Trinken geeignet sind, wenn ein Reinigungsgefäss auf der Trinkgefässablage platziert wird. Andererseits wird ermöglicht, einen Reinigungsbetriebsmodus des Heissgetränkeautomaten entweder manuell zu starten, wenn ein Reinigungsgefäss auf der Trinkgefässablage platziert wurde, wobei dies vereinfacht wird, da nur der Reinigungsbetriebsmodus auf der Anzeigeeinrichtung angezeigt wird und auswählbar ist, oder aber einen Reinigungsbetriebsmodus automatisch zu starten, sobald ein Reinigungsgefäss unterhalb einer der Heissgetränkeauslässe auf der Trinkgefässablage abgestellt wird.

Gemäss einer weiteren Ausführungsform des Heissgetränkeautomaten ist vorgesehen, dass ein erster Sensor vorgesehen ist, der ausgebildet ist, zu detektieren, ob ein Trinkgefäss unterhalb des ersten Heissgetränkeauslasses abgestellt ist und/oder von welcher Art ein Trinkgefäss ist, welches unterhalb des ersten Heissgetränkeauslasses abgestellt ist, und dass ein zweiter Sensor vorgesehen ist, der ausgebildet ist, zu detektieren, ob ein Trinkgefäss unterhalb des zweiten Heissgetränkeauslasses abgestellt ist und/oder von welcher Art ein Trinkgefäss ist, welches unterhalb des zweiten Heissgetränkeautomaten abgestellt ist.

Vorteilhafterweise kann hierdurch sowohl detektiert werden, ob unterhalb des ersten Heissgetränkeauslasses ein Trinkgefäss abgestellt ist, als auch detektiert werden, ob unterhalb des zweiten Heissgetränkeauslasses ein Trinkgefäss abgestellt ist. Dies gilt entsprechend dafür, von welcher Art ein Trinkgefäss ist, welches unterhalb des ersten Heissgetränkeauslasses und/oder des zweiten Heissgetränkeauslasses abgestellt ist. Somit wird ermöglicht, dass Heissgetränke nur an den Heissgetrankeauslässen ausgegeben werden, unterhalb derer ein Trinkgefäss abgestellt ist. Ausserdem wird ermöglicht, dass dem Nutzer über die Anzeigeeinrichtung nur die Heissgetränke angezeigt werden, welche an den Heissgetränkeauslässen ausgebbar sind, unterhalb derer mindestens ein Trinkgefäss abgestellt ist.

Somit werden dem Nutzer die Heissgetränke angezeigt, die am ersten Heissgetränkeauslass ausgebbar sind, wenn unterhalb des ersten Heissgetränkeauslasses ein Trinkgefäss abgestellt ist. Entsprechendes gilt für den zweiten Heissgetränkeauslass. Wenn unterhalb des ersten sowie unterhalb des zweiten Heissgetränkeauslasses ein Trinkgefäss abgestellt wurde, insgesamt also zwei Trinkgefässe auf der Trinkgefässablage abgestellt wurden, zeigt die Anzeigeeinrichtung die Heissgetränke an, die am ersten Heissgetränkeauslass oder am zweiten Heissgetränkeauslass ausgebbar sind. Somit kann der Nutzer ein Heissgetränk auswählen, welches aus dem ersten Heissgetränkeauslass oder aus dem zweiten Heissgetränkeauslass ausgegeben wird. Da unter beiden Heissgetränkeauslässen ein Trinkgefäss abgestellt ist, wird verhindert, dass ein Heissgetränk aus einem Heissgetränkeauslass ausgegeben wird, unterhalb dessen gar kein Trinkgefäss abgestellt ist.

Gemäss einer weiteren Ausführungsform des Heissgetränkeautomaten ist vorgesehen, dass der mindestens eine Sensor in einer Ebene parallel zur Abstellebene der Trinkgefässablage angeordnet ist und ausgebildet ist, in der Ebene, in der der Sensor angeordnet ist, vorzugsweise durch Abstandsmessung zu detektieren, ob ein Trinkgefäss unterhalb des ersten Heissgetränkeauslasses abgestellt ist und/oder unterhalb des zweiten Heissgetränkeauslasses abgestellt ist und/oder von welcher Art ein Trinkgefäss ist, welches unterhalb des ersten Heissgetränkeauslasses oder unterhalb des zweiten Heissgetränkeauslasses abgestellt ist.

Vorteilhafterweise kann hierdurch erreicht werden, dass nur ein einzelner Sensor notwendig ist, um zu detektieren, ob ein Trinkgefäss unterhalb des ersten Heissgetränkeauslasses abgestellt oder unterhalb des zweiten Heissgetränkeauslasses abgestellt ist. Insbesondere wenn der Sensor als Abstandsmesssensor ausgebildet ist, kann eine derartige Detektierung vorgenommen werden, da der Abstand zwischen dem Sensor und dem ersten Heissgetränkeauslass ein anderer ist als der Abstand zwischen dem ersten Sensor und dem zweiten Heissgetränkeauslass.

Wenn also ein Trinkgefäss unterhalb des ersten Heissgetränkeauslasses platziert wird, wird vom Sensor der Abstand zwischen dem Sensor und dem Trinkgefäss, das unterhalb des ersten Heissgetränkeauslasses platziert ist, gemessen. Wenn ein Trinkgefäss unterhalb des zweiten Heissgetränkeauslasses platziert wird, wird der Abstand zwischen dem Sensor und dem Trinkgefäss, das unterhalb des zweiten Heissgetränkeauslasses platziert ist, gemessen. Da diese zwei Distanzen unterschiedlich sind, kann somit vom Sensor detektiert werden, ob ein Trinkgefäss unterhalb des ersten Heissgetränkeauslasses platziert ist oder unterhalb des zweiten Heissgetränkeauslasses platziert ist.

Gemäss einer weiteren Ausführungsform des Heissgetränkeautomaten ist vorgesehen, dass der Heissgetränkeautomat mindestens einen weiteren Heissgetränkeauslass aufweist, wobei der Sensor ausgebildet ist, zu detektieren, ob ein Trinkgefäss unterhalb des ersten und/oder des zweiten und/oder des mindestens einen weiteren Heissgetränkeauslasses auf der Trinkgefässablage abgestellt ist und/oder von welcher Art ein Trinkgefäss ist, welches unterhalb des ersten und/oder des zweiten und/oder des mindestens einen weiteren Heissgetränkeauslasses auf der Trinkgefässablage abgestellt ist.

Vorteilhafterweise wird somit verhindert, dass ein Heissgetränk von einem Heissgetränkeauslass ausgegeben wird, unterhalb dessen gar kein Trinkgefäss abgestellt ist, und noch vorteilhafterweise ermöglicht, dass auf der Anzeigeeinrichtung dem Nutzer jeweils nur die Heissgetränke angezeigt werden, welche von den Heissgetränkeauslässen ausgebbar sind, unterhalb dessen sich Trinkgefässe befinden. Denkbar ist, dass der Heissgetränkeautomat als Kaffeevollautomat ausgebildet ist und einen Cappuccinoauslass, einen Kaffeeauslass sowie einen Heisswasserauslass aufweist und die drei Positionen unterhalb dieser drei Auslässe von dem mindestens einen Sensor derart überwacht werden, dass der mindestens eine Sensor erfasst, wenn ein Trinkgefäss unterhalb einer der drei Auslässe platziert wird.

Denkbar ist auch, dass der Heissgetränkeautomat noch mehr Heissgetränkeauslässe aufweist, wobei der mindestens eine Sensor ausgebildet ist, vorzugsweise alle Positionen unterhalb der Heissgetränkeauslässe zu überwachen derart, dass vom mindestens einen Sensor detektiert wird, wenn ein Trinkgefäss unterhalb einer der Heissgetränkeauslässe platziert wird.

Nachfolgend wird die Erfindung unter Bezugnahme auf die beiliegenden Zeichnungen anhand exemplarischer Ausführungsformen des erfindungsgemässen Heissgetränkeautomats näher beschrieben.

In den Zeichnungen zeigen:
- Fig. 1: eine schematische Frontansicht des erfindungsgemässen Heissgetränkeautomats;
- Fig. 2: eine schematische Frontansicht des erfindungsgemässen Heissgetränkeautomats mit Trinkgefäss unter einem ersten Heissgetränkeauslass;
- Fig. 3: eine schematische Frontansicht des erfindungsgemässen Heissgetränkeautomats mit Trinkgefäss unter einem zweiten Heissgetränkeauslass;
- Fig. 4: eine schematische Frontansicht einer weiteren Ausführungsform des erfindungsgemässen Heissgetränkeautomats mit Trinkgefässen unterhalb eines ersten Heissgetränkeauslasses;
- Fig. 5: eine schematische Frontansicht einer weiteren Ausführungsform des erfindungsgemässen Heissgetränkeautomats mit Trinkgefäss unterhalb eines zweiten Heissgetränkeauslasses; und
- Fig. 6: eine schematische Frontansicht einer weiteren Ausführungsform des erfindungsgemässen Heissgetränkeautomats mit einem Reinigungsgefäss unterhalb mehrerer Heissgetränkeauslässe.

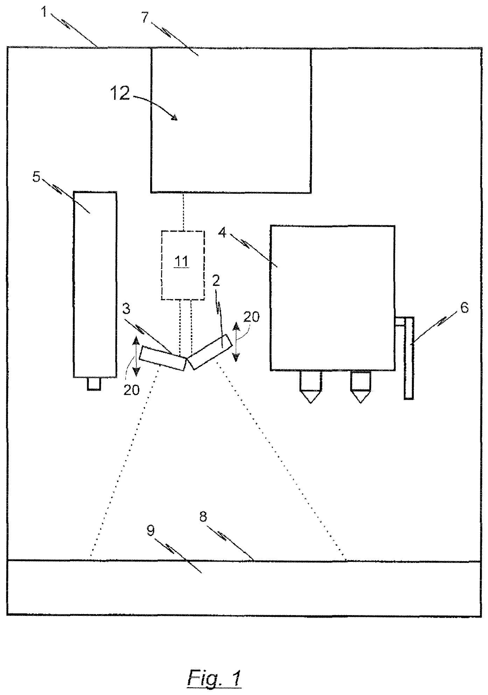

Fig. 1 zeigt einen Heissgetränkeautomaten 1 in einer schematischen Frontansicht, wobei der Heissgetränkeautomat 1 mehrere Heissgetränkeauslässe 4, 5, 6 bzw. einen ersten Heissgetränkeauslass 4, einen zweiten Heissgetränkeauslass 5 sowie einen weiteren Heissgetränkeauslass 6 aufweist.

Der Heissgetränkeautomat 1 ist zum Ausgeben einer Mehrzahl verschiedener Heissgetränke ausgebildet. Im Folgenden werden die Bezeichnungen G1, G2, G3 und G4 verwendet, um beispielshaft vier verschiedene Getränke zu bezeichnen, welche von dem Heissgetränkeautomaten 1 ausgegeben können, wobei der Heissgetränkeautomat 1 prinzipiell geeignet sein kann, eine beliebige Anzahl verschiedener Heissgetränke auszugeben).

Im Folgenden wird (im Sinne eines Beispiels) angenommen, dass die Gesamtheit aller Heissgetränke, welche von dem Heissgetränkeautomaten 1 ausgebbar sind, zwei verschiedene Teilmengen der Heissgetränke umfasst, beispielsweise eine erste Teilmenge, welche die oben genannten Heissgetränke G1 und G2 umfasst, und eine zweite Teilmenge, welche die oben genannten Heissgetränke G3 und G4 umfasst, wobei die Heissgetränke der ersten Teilmenge (G1, G2) ausschliesslich aus dem Heissgetränkeauslass 4 und die Heissgetränke der zweiten Teilmenge (G3, G4) ausschliesslich aus dem Heissgetränkeauslass 5 ausgebbar sind.

Des Weiteren ist ein erster Sensor 2 sowie ein zweiter Sensor 3 vorgesehen, die vorzugsweise als optische Abstandsmesssensoren ausgebildet sind.

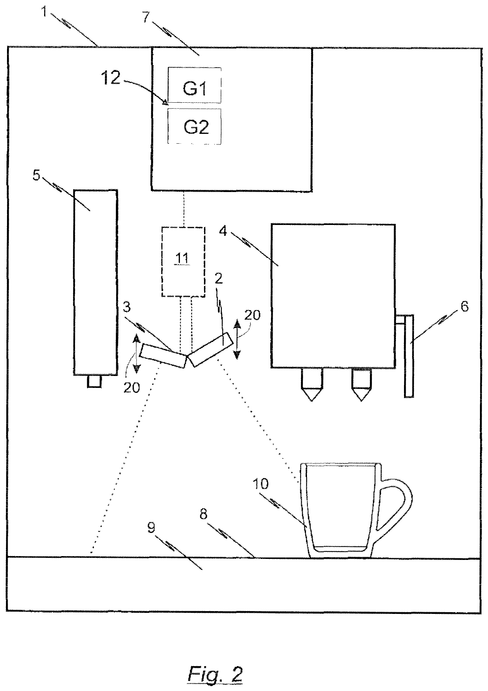

Wie in Fig. 2 zu sehen, kann ein Trinkgefäss 10, beispielsweise eine Tasse oder ein Glas aus Keramik oder Glasmaterial, auf einer Trinkgefässablage 8 abgestellt bzw. platziert werden.

Die Sensoren 2, 3 sind ausgebildet, zu detektieren, ob unterhalb einer der Heissgetränkeauslässe, insbesondere unterhalb des ersten Heissgetränkeauslasses 4 bzw. unterhalb des zweiten Heissgetränkeauslasses 5, ein Trinkgefäss 10 abgestellt wird.

In Fig. 2 ist schematisch ein Trinkgefäss 10 unterhalb des ersten Heissgetränkeauslasses 4 abgestellt und der erste Sensor 2 detektiert dies, vorzugsweise durch Aussenden eines elektromagnetischen Pulses und anschliessender Laufzeitmessung.

Der Heissgetränkeautomat 1 weist eine (in Fig. 1-6 durch ein gestricheltes Rechteck dargestellte) Steuereinheit 11 auf, sowie eine Anzeigeeinrichtung 7, auf der einem Nutzer Heissgetränke angezeigt werden, die dieser auswählen kann. Die Auswahl erfolgt beispielsweise wieder über die Anzeigeeinrichtung 7, die hierzu ein berührungsempfindliches Display aufweist, sodass die Anzeigeeinrichtung 7 eine (im vorliegenden Fall manuell bedienbare) Eingabeeinrichtung 12 zum Auswählen eines auszugebenden Heissgetränks umfasst, welche von einem Benutzer betätigt werden kann, um dasjenige Heissgetränk bzw. gegebenenfalls diejenigen Heissgetränke auszuwählen, welches bzw. welche von dem Heissgetränkeautomaten auf Wunsch des Benutzers auszugeben ist bzw. sind. Die Eingabeeinrichtung 12 ermöglicht demnach einem Benutzer eine Eingabe einer an die Steuereinheit 11 gerichteten Information, welche ein vom Benutzer ausgewähltes und von dem Heissgetränkeautomaten auszugebendes Heissgetränk spezifiziert.

Natürlich ist auch denkbar, die Eingabeeinrichtung 12 zur Auswahl eines Heissgetränks in einer anderen Form auszubilden, z. B. als Wahlrad (welches beispielsweise in mehrere Stellungen drehbar ist, welche den zur Auswahl stehenden Heissgetränken zugeordnet sind) oder als Tastatur (z.B. mit einer oder mehreren Tasten, welche den zur Auswahl stehenden Heissgetränken zugeordnet sind) oder eine andere Einrichtung, welches es ermöglicht, eine entsprechende Information an die Steuereinheit 11 zu richten. Die Anzeigeeinrichtung 7 ist vorzugsweise als Display, bevorzugter als berührungsempfindliches Display ausgebildet.

Wenn nun ein Trinkgefäss 10 unter den ersten Heissgetränkeauslass 4 abgestellt wird, wird dies erfindungsgemäss vom ersten Sensor 2 detektiert. Diese Information wird vom ersten Sensor 2 über eine geeignete (in den Figuren durch eine gestrichelte, den Sensor 2 mit der Steuereinheit 11 verbindende Linie dargestellte) signaltechnische Verbindung an die Steuereinheit 11 weitergegeben, welche daraufhin die Anzeigeeinrichtung 7 ansteuert (in den Figuren durch eine gestrichelte, die Steuereinheit 11 mit der Anzeigeeinrichtung 7 verbindende Linie dargestellt), und zwar derart, dass auf der Anzeigeeinrichtung 7 die Heissgetränke zur Auswahl dargestellt werden, welche vom ersten Heissgetränkeauslass 4 in das Trinkgefäss 10 ausgebbar sind. Im vorliegenden Beispiel gemäss Fig. 2 deuten die Bezeichnungen G1 und G2 an, dass die Anzeigeeinrichtung 7 gerade zwei verschiedene Heissgetränke G1 und G2 anzeigt, welche vom ersten Heissgetränkeauslass 4 ausgebbar sind und von einem Benutzer auswählbar sind.

Ein Nutzer kann somit auf der Anzeigeeinrichtung 7 nur die Heissgetränke sehen, die von dem ersten Heissgetränkeauslass 4 in das Trinkgefäss 10 ausgebbar sind. Der Nutzer wird somit nicht mit vielen Informationen überfrachtet, die in diesem Moment nicht hilfreich wären, beispielsweise nicht mit Anzeigen von Heissgetränken, die gar nicht zum ersten Heissgetränkeauslass 4 ausgebbar sind. Ausserdem wird verhindert, dass der Nutzer Heissgetränke auswählt, die dann an einem Heissgetränkeauslass ausgegeben werden, unterhalb dessen sich gar kein Trinkgefäss 10 befindet.

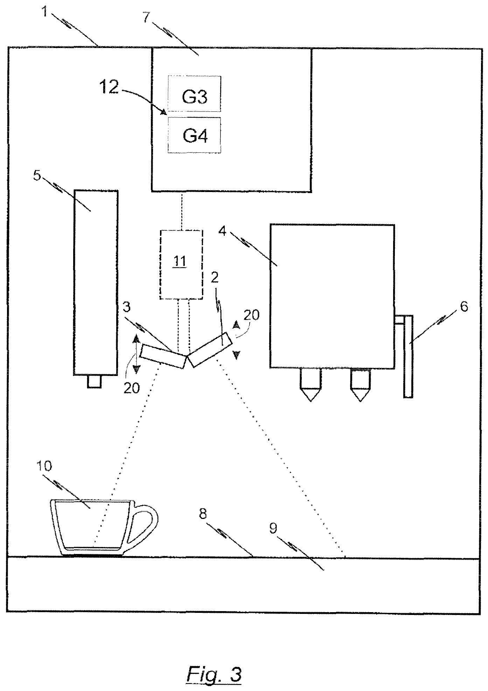

In Fig. 3 ist beispielhaft die Situation gezeigt, dass ein Trinkgefäss 10 unterhalb des zweiten Heissgetränkeauslasses 5 platziert ist. Dies wird vom zweiten Sensor 3 detektiert. Entsprechend und wie oben beschrieben wird diese Information vom zweiten Sensor 3 an die Steuereinheit 11 weitergegeben (wie in den Figuren durch eine gestrichelte, den Sensor 3 mit der Steuereinheit 11 verbindende Linie angedeutet), welche daraufhin die Anzeigeeinrichtung 7 so ansteuert, dass auf der Anzeigeeinrichtung 7 nur die Heissgetränke dargestellt werden, die am zweiten Heissgetränkeauslass 5 in das Trinkgefäss 10 ausgebbar sind. Im vorliegenden Beispiel gemäss Fig. 3 deuten die Bezeichnungen G3 und G4 an, dass die Anzeigeeinrichtung 7 gerade zwei verschiedene Heissgetränke G3 und G4 anzeigt, welche vom zweiten Heissgetränkeauslass 5 ausgebbar sind und von einem Benutzer auswählbar sind.

Denkbar ist natürlich auch, dass sowohl unter dem ersten Heissgetränkeauslass 4 als auch unter dem zweiten Heissgetränkeauslass 5 ein Trinkgefäss 10 angeordnet ist. In diesem Fall wird auf der Anzeigeeinrichtung 7 die Information dargestellt, die den Heissgetränken entspricht, die von dem ersten Heissgetränkeauslass 4 oder von dem zweiten Heissgetränkeauslass 5 ausgebbar sind. Der Nutzer kann somit ein Heissgetränk auswählen, das dann von dem ersten Heissgetränkeauslass 4 in das unter dem ersten Heissgetränkeauslass 4 befindliche Trinkgefäss 10 ausgebeben wird oder von dem zweiten Heissgetränkeauslass 5 in das entsprechend darunter platzierte Trinkgefäss 10 ausgegeben wird. Entsprechendes gilt, wenn auf der Trinkgefässablage 8 ein Trinkgefäss 10 abgestellt wird, welches derart gross ist, dass es sowohl unter dem ersten Heissgetränkeauslass 4 als auch unter dem zweiten Heissgetränkeauslass 5 angeordnet ist. In diesem Fall wird von den Sensoren 3 und 4 detektiert, dass sowohl unter dem ersten Heissgetränkeauslass 4 als auch unter dem zweiten Heissgetränkeauslass 5 ein Trinkgefäss 10 angeordnet ist, sodass sowohl aus dem ersten Heissgetränkeauslass 4 als auch aus dem zweiten Heissgetränkeauslass 5 ein entsprechendes Heissgetränk in das Trinkgefäss 10 ausgegebenen werden könnte. Entsprechend steuert die Steuereinheit 11 die Anzeigeeinrichtung 7 so an, dass auf der Anzeigeeinrichtung 7 sowohl eine oder mehrere Heissgetränke, welche aus dem ersten Heissgetränkeauslass 4 ausgebbar sind, als auch ein oder mehrere Heissgetränke, welche am zweiten. Heissgetränkeauslass 5 in das Trinkgefäss 10 ausgebbar sind, dargestellt werden.

Ebenso ist denkbar, dass mindestens ein weiterer Heissgetränkeauslass 6 vorgesehen ist, wobei erfindungsgemäss vorzugsweise von dem mindestens einen Sensor 2, 3 detektiert wird, ob ein Trinkgefäss 10 unterhalb des weiteren Trinkgefässauslasses 6 platziert wurde. Entsprechend wird dann auf der Anzeigeeinrichtung 7 lediglich dargestellt, welche Heissgetränke von dem weiteren Heissgetränkeauslass 6 ausgebbar sind. Natürlich können auch wieder mehrere Trinkgefässe 10 unterhalb verschiedener Heissgetränkeauslässe 4, 5, 6 abgestellt werden und auf der Anzeigeeinrichtung 7 werden die Heissgetränke angezeigt, die von den entsprechenden Heissgetränkeauslässen 4, 5, 6 ausgegeben werden können.

Ausserdem wird verhindert, dass Heissgetränke an Heissgetränkeauslässen 4, 5, 6 ausgegeben werden, unter denen kein Trinkgefäss 10 angeordnet ist. Ob ein Trinkgefäss 10 unterhalb einer der Heissgetränkeauslässe 4, 5, 6 angeordnet ist, wird in diesem Fall jeweils von dem mindestens einen Sensor 2, 3 detektiert, wobei diese Information an die Steuereinheit 11 übermittelt wird, und die Steuereinheit 11 verhindert, dass ein Heissgetränk an einem Heissgetränkeauslass 4, 5, 6 ausgegeben wird, unterhalb dessen kein Trinkgefäss 10 abgestellt ist, insbesondere dadurch, dass kein Heissgetränk vom Nutzer auswählbar ist, welches nur an einem Heissgetränkeauslass ausgebbar ist, unter welchem kein Trinkgefäss abgestellt ist.

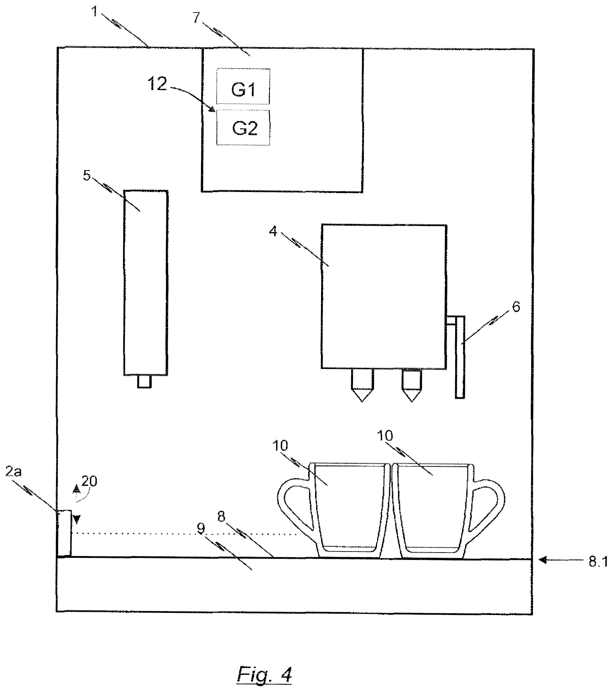

In Fig. 4 ist eine weitere Ausführungsform des erfindungsgemässen Heissgetränkeautomaten dargestellt, in welcher lediglich ein Sensor 2a vorgesehen ist. Der Sensor 2a ist derart angeordnet, dass die Detektionsebene des Sensors 2a parallel zu der Abstellebene 8.1 der Trinkgefässe 10 auf der Trinkgefässablage 8 ausgebildet ist.

Der Sensor 2a ist hierbei vorzugsweise als Abstandssensor ausgebildet und ist ausgelegt, die Distanz zwischen dem Sensor 2a und einem Trinkgefäss 10 zu messen, welches unter einem der Heissgetränkeauslässe 4, 5, 6 abgestellt ist. Da die Distanzen zwischen dem Sensor 2a und dem jeweiligen Heissgetränkeauslässen 4, 5, 6 bzw. den Positionen unterhalb der Heissgetränkeauslässe 4, 5, 6, an denen Trinkgefässe 10 platziert werden können, variiert, kann somit von dem Sensor 2a detektiert werden, ob ein Trinkgefäss 10 unterhalb eines der Heissgetränkeauslässe 4, 5, 6 platziert ist und unter welchem der Heissgetränkeauslässe 4, 5, 6 ein entsprechendes Trinkgefäss 10 platziert ist.

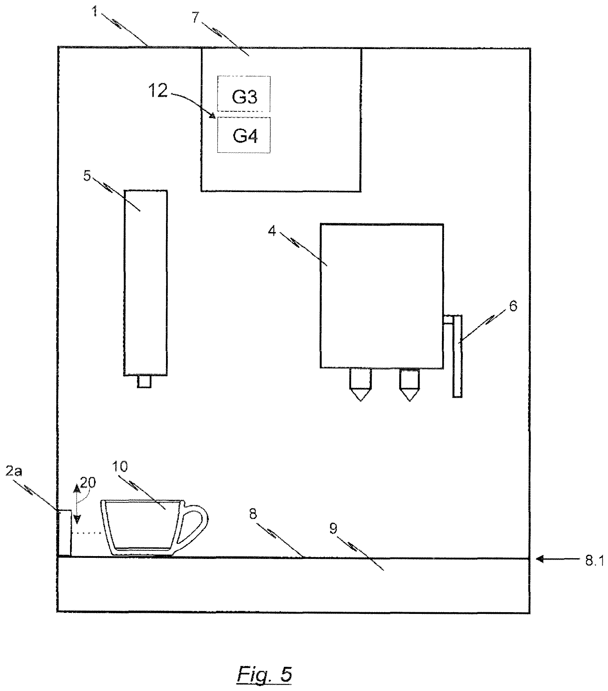

Exemplarisch zeigt Fig. 4 hierbei den Fall, dass ein Trinkgefäss 10 unterhalb des ersten Heissgetränkeauslasses 4 platziert wurde. Dies kann von dem Sensor 2a erfasst werden. Fig. 5 zeigt beispielhaft den Fall, bei dem ein Trinkgefäss 10 unterhalb des zweiten Heissgetränkeauslasses 5 platziert wurde. Auch dies kann vom Sensor 2a detektiert werden.

Wie bereits oben beschrieben kann diese entsprechende Information vom Sensor 2a an die Steuereinheit 11 übermittelt werden, die wiederum die Anzeigeeinrichtung 7 ansteuert derart, dass nur Heissgetränke auf der Anzeigeeinrichtung 7 angezeigt werden, die von den Heissgetränkeauslässen 4, 5, 6 ausgebbar sind, unter denen jeweils Trinkgefässe 10 abgestellt sind. Der mindestens eine Sensor 2a ist vorzugsweise darüber hinaus ausgebildet, die Art des Trinkgefässes 10 zu detektieren, die auf der Trinkgefässablage 8 unterhalb einer der Heissgetränkeauslässe 4, 5, 6 abgestellt wird. Diese Information wird vom Sensor 2a wiederum an die Steuereinheit 11 übermittelt, die die Anzeigeeinrichtung 7 dann entsprechend so ansteuert, dass wiederum nur die Heissgetränke auf der Anzeigeeinrichtung 7 angezeigt werden, die in entsprechenden Trinkgefässe 10 durch die entsprechenden Heissgetränkeauslässe 4, 5, 6 ausgebbar sind.

Im vorliegenden Beispiel gemäss Fig. 4 deuten die Bezeichnungen G1 und G2 an, dass die Anzeigeeinrichtung 7 gerade zwei verschiedene Heissgetränke G1 und G2 anzeigt, welche vom ersten Heissgetränkeauslass 4 ausgebbar sind und von einem Benutzer auswählbar sind. Entsprechend deuten im vorliegenden Beispiel gemäss Fig. 5 die Bezeichnungen G3 und G4 an, dass die Anzeigeeinrichtung 7 gerade zwei verschiedene Heissgetränke G3 und G4 anzeigt, welche vom zweiten Heissgetränkeauslass 5 ausgebbar sind und von einem Benutzer auswählbar sind.

Insbesondere kann die Art des Trinkgefässes bestimmen, welches Flüssigkeitsvolumen im Trinkgefäss 10 aufnehmbar ist. Dieses Volumen kann die Art des Heissgetränkes bestimmen, die von dem Trinkgefäss 10 aufnehmbar ist. Beispielsweise kann ein grosser Cappuccino nicht in einer kleinen Espressotasse aufgenommen werden.

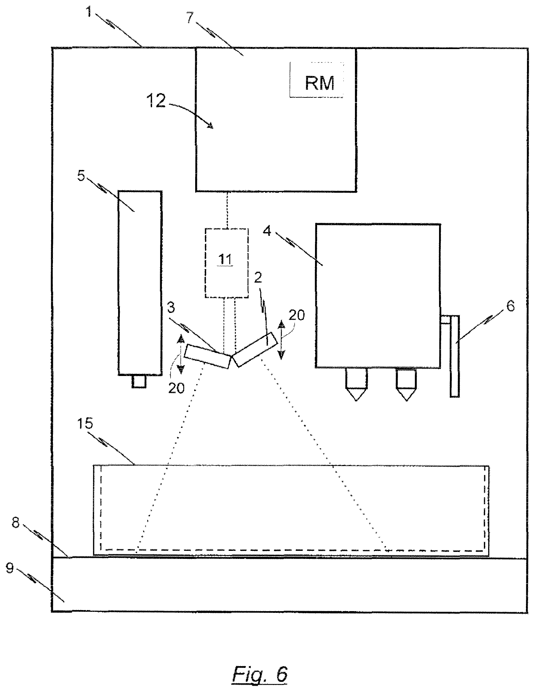

Schliesslich ist gemäss einer in Fig. 6 dargestellten Ausführungsform vorgesehen, dass ein Reinigungsgefäss 15 anstelle eines Trinkgefässes 10 unterhalb einer der Heissgetränkeauslässe 4, 5, 6 platziert wird und von dem mindestens einen Sensor 2, 3 detektiert wird, dass ein Reinigungsgefäss 15 unterhalb einer der Heissgetränkeauslässe 4, 5, 6 platziert wurde.

Hierauf folgend wird vorteilhafter Weise die Anzeigeeinrichtung 7 von der Steuereinheit 11 angesteuert derart, dass dem Nutzer ein Reinigungsbetriebsmodus des Heissgetränkeautomaten 1 angezeigt wird, sodass der Benutzer entweder diesen Reinigungsbetriebsmodus auswählen kann oder aber der Reinigungsbetriebsmodus automatisch gestartet wird. In Fig. 6 deutet das Bezugszeichen RM an, dass die Anzeigeeinrichtung 7 gerade einen Reinigungsbetriebsmodus anzeigt.

Natürlich ist auch denkbar, dass der Reinigungsbetriebsmodus automatisch gestartet wird, ohne dass dies auf der Anzeigeeinrichtung 7 dargestellt wird und/oder ohne dass der Nutzer dies auswählen muss. Im Reinigungsmodus wird ein Reinigungsfluid (z.B. heisses Wasser, Dampf, ein Heisswasser/Dampf-Gemisch oder eine mit einem Reinigungs- oder Entkalkungsmittel versehene Flüssigkeit) durch zumindest einen der Heissgetränkeauslässe 4, 5, 6 in das unter den Heissgetränkeauslässen 4, 5, 6 angeordnete Reinigungsgefäss 15 geleitet und auf diese Weise zumindest einer der Heissgetränkeauslässe 4, 5, 6 mit dem Reinigungsfluid gespült und dabei gereinigt (sofern mittels der Sensoren 2, 3 verifiziert werden konnte, dass ein Reinigungsgefäss 15 unter dem mindestens einen der Heissgetränkeauslässe 4, 5, 6 angeordnet ist).

In den Fig. 1-6 ist jeweils durch einen Doppelpfeil angedeutet, dass der mindestens eine Sensor 2, 3 bzw. 2a derart angeordnet sein kann, dass seine Höhe relativ zur Trinkgefässablage 8 verstellbar ist. Auf diese Weise ist die Höhe des mindestens einen Sensors 2, 3 bzw. 2a veränderbar, beispielsweise in Abhängigkeit von der jeweiligen Höhe der Heissgetränkeauslässe 4, 5, 6 und/oder von der Höhe des jeweils verwendeten Trinkgefässes 10 und/oder von der Höhe des jeweils verwendeten Reinigungsgefässes 15. Dementsprechend ist die Höhe des mindestens einen Sensors 2, 3 bzw. 2a an die jeweilige Höhe der Heissgetränkeauslässe 4, 5, 6 und/oder die Höhe des jeweils verwendeten Trinkgefässes 10 und/oder die Höhe des jeweils verwendeten Reinigungsgefässes 15 anpassbar.

Die Erfindung ist nicht auf die in den Zeichnungen dargestellten Ausführungsformen des erfindungsgemässen Heissgetränkeautomats beschränkt, sondern wird von den Ansprüchen angegeben.

## Patentansprüche

1. Heissgetränkeautomat (1) zum Ausgeben einer Mehrzahl verschiedener Heissgetränke (G1, G2, G3, G4), welcher aufweist:
einen ersten Heissgetränkeauslass (4);
einen zweiten Heissgetränkeauslass (5);
eine Trinkgefässablage (8), auf der mindestens ein Trinkgefäss (10) unter dem ersten Heissgetränkeauslass (4) und/oder dem zweiten Heissgetränkeauslass (5) derart abstellbar ist, dass aus dem ersten und/oder dem zweiten Heissgetränkeauslass (4, 5) ein Heissgetränk in das mindestens eine Trinkgefäss (10) ausgebbar ist;
eine Sensoreinheit mit mindestens einem Sensor (2, 3, 2a), wobei der mindestens eine Sensor (2, 3, 2a) ausgebildet ist, zu detektieren, ob auf der Trinkgefässablage (8) ein Trinkgefäss (10) unter dem ersten Heissgetränkeauslass (4) und/oder dem zweiten Heissgetränkeauslass (5) abgestellt ist;
eine Steuereinheit (11) sowie eine Anzeigeeinrichtung (7);
**dadurch gekennzeichnet, dass** der erste Heissgetränkeauslass (4) und der zweite Heissgetränkeauslass (5) derart ausgebildet sind, dass mindestens eines der Heissgetränke (G1, G2) ausschliesslich aus dem ersten Heissgetränkeauslass (4) ausgebbar ist und mindestens eines der Heissgetränke (G3, G4) ausschliesslich aus dem zweiten Heissgetränkeauslass (5) ausgebbar ist;
wobei der mindestens eine Sensor (2, 3, 2a) mit der Steuereinheit (11) derart verbunden ist, dass die Steuereinheit (11) eine Information darüber empfangen kann, ob der mindestens eine Sensor (2, 3, 2a) ein unter dem ersten Heissgetränkeauslass (4) und/oder dem zweiten Heissgetränkeauslass (5) abgestelltes Trinkgefäss detektiert hat, und
wobei die Steuereinheit (11) ausgebildet ist, die Anzeigeeinrichtung (7) derart anzusteuern, dass die Anzeigeeinrichtung (7) anzeigt: (i) mindestens ein aus dem ersten Heissgetränkeauslass (4) ausgebbares Heissgetränk (G1, G2), falls der mindestens eine Sensor (2, 3, 2a) ein unter dem ersten Heissgetränkeauslass (4) abgestelltes Trinkgefäss (10) detektiert, und/oder (ii) mindestens ein aus dem zweiten Heissgetränkeauslass (5) ausgebbares Heissgetränk (G3, G4), falls der mindestens eine Sensor (2, 3, 2a) ein unter dem zweiten Heissgetränkeauslass (4) abgestelltes Trinkgefäss (10) detektiert.

2. Heissgeräteautomat (1) nach Anspruch 1,
mit einer Eingabeeinrichtung (11) zum Auswählen eines auszugebenden Heissgetränks, wobei als auszugebendes Heissgetränk ausschliesslich ein Heissgetränk auswählbar ist, welches von der Anzeigeeinrichtung (7) angezeigt ist.

3. Heissgetränkeautomat (1) nach Anspruch 1 oder 2,
wobei der mindestens eine Sensor (2, 3, 2a) als Ultraschall-, Laserentfernungsmess-, PMD-, LIDAR-, induktiver oder kapazitativer Sensor ausgebildet ist.

4. Heissgetränkeautomat (1) nach einem der Ansprüche 1 bis 3,
wobei der mindestens eine Sensor (2, 3, 2a) ausgebildet ist, für ein abgestelltes Trinkgefäss (10) zu detektieren: die Grösse des Trinkgefässes (10), die Formgebung des Trinkgefässes (10), einen auf dem Trinkgefäss (10) angebrachten Identifikationscode und/oder das Material des Trinkgefässes (10).

5. Heissgetränkeautomat (1) einem der Ansprüche 3 bis 4,
wobei die Steuereinheit (11) die detektierten Trinkgefässe (10) Trinkgefässgruppen zuordnet, wobei die Trinkgefässe (10) verschiedener Trinkgefässgruppen jeweils geeignet und/oder vorgesehen sind für verschiedene Heissgetränke.

6. Heissgetränkeautomat (1) nach einem der Ansprüche 1 bis 5,
wobei der mindestens eine Sensor (2, 3, 2a) ausgebildet ist, zu detektieren, ob das Trinkgefäss (10) als Reinigungsgefäss (15) ausgebildet ist.

7. Heissgetränkeautomat (1) nach Anspruch 6,
mit einem Reinigungsgefäss (15),
wobei der mindestens eine Sensor (2, 3, 2a) ausgebildet ist, das Reinigungsgefäss (15) zu detektieren, und
wobei die Steuereinheit (11) ausgebildet ist, einen Reinigungsbetriebsmodus des Heissgetränkeautomat (1) zu starten, wenn von dem mindestens einen Sensor (2, 3, 2a) detektiert wird, dass das Reinigungsgefäss (15) auf der Trinkgefässablage (8) unter dem ersten Heissgetränkeauslass (4) und/oder dem zweiten Heissgetränkeauslass (5) abgestellt ist.

8. Heissgetränkeautomat (1) nach einem der Ansprüche 1 bis 7,
wobei ein erster Sensor (2) vorgesehen ist, der ausgebildet ist, zu detektieren, ob ein Trinkgefäss (10) unter dem ersten Heissgetränkeauslasses (4) abgestellt ist, und ein zweiter Sensor (3) vorgesehen ist, der ausgebildet ist, zu detektieren, ob ein Trinkgefäss (10) unter dem zweiten Heissgetränkeauslass (5) abgestellt ist.

9. Heissgetränkeautomat (1) nach einem der Ansprüche 1 bis 7,
wobei der mindestens eine Sensor (2, 3, 2a) in einer Ebene parallel zu einer Abstellebene (8.1) der Trinkgefässablage (8) angeordnet ist und ausgebildet ist, in der Ebene, in welcher der mindestens eine Sensor (2, 3, 2a) angeordnet ist, zu detektieren, ob ein Trinkgefäss (10) unter dem ersten Heissgetränkeauslass (4) abgestellt ist oder unter dem zweiten Heissgetränkeauslass (5) abgestellt ist.

10. Heissgetränkeautomat (1) nach einem der Ansprüche 1 bis 9,
wobei der Heissgetränkeautomat (1) mindestens einen weiteren Heissgetränkeauslass (6) aufweist, und wobei der mindestens eine Sensor (2, 3, 2a) ausgebildet ist, zu detektieren, ob ein Trinkgefäss (10) unter dem ersten und/oder dem zweiten Heissgetränkeauslass (4, 5) und/oder dem mindestens einen weiteren Heissgetränkeauslass (6) auf der Trinkgefässablage (8) abgestellt ist.

11. Heissgetränkeautomat (1) nach einem der Ansprüche 1 bis 10,
wobei der mindestens eine Sensor (2, 3, 2a) derart angeordnet ist, dass seine Höhe relativ zur Trinkgefässablage (8) verstellbar ist.

12. Heissgetränkeautomat (1) nach einem der Ansprüche 1 bis 11, welcher als Kaffeevollautomat ausgebildet ist.

13. Heissgetränkeautomat (1) nach Anspruche 12,
wobei der erste Heissgetränkeauslass (4) als Kaffeeauslass und der zweite Heissgetränkeauslass (5) als Cappuccino-auslass ausgebildet ist.

14. Verfahren zum Betreiben eines Heissgetränkeautomaten (1) nach einem der Ansprüche 1 bis 13,
welcher Heissgetränkeautomat (1) einen ersten Heissgetränkeauslass (4), einen zweiten Heissgetränkeauslass (5), eine Trinkgefässablage (8) und eine Anzeigeeinrichtung (7) aufweist und zum Ausgeben einer Mehrzahl verschiedener Heissgetränke (G1, G2, G3, G4) ausgebildet ist,
wobei der erste Heissgetränkeauslass (4) und der zweite Heissgetränkeauslass (5) derart ausgebildet sind, dass mindestens eines der Heissgetränke (G1, G2) ausschliesslich aus dem ersten Heissgetränkeauslass (4) ausgebbar ist und mindestens eines der Heissgetränke (G3, G4) ausschliesslich aus dem zweiten Heissgetränkeauslass (5) ausgebbar ist,
wobei folgende Verfahrensschritte vorgesehen sind:
• Detektieren durch den mindestens einen Sensor (2, 3, 2a), ob mindestens ein Trinkgefäss (10) auf der Trinkgefässablage (8) unter dem ersten Heissgetränkeauslass (4) und/oder dem zweiten Heissgetränkeauslass (5) abgestellt wird;
• Ansteuern der Anzeigeeinrichtung (7) durch eine Steuereinheit (11) in dem Fall, dass ein Trinkgefäss (10) unter dem ersten Heissgetränkeauslass (4) und/oder dem zweiten Heissgetränkeauslass (5) abgestellt wird, derart, dass die Anzeigeeinrichtung (7) anzeigt: (i) mindestens ein aus dem ersten Heissgetränkeauslass (4) ausgebbares Heissgetränk (G1, G2), falls der mindestens eine Sensor (2, 3, 2a) ein unter dem ersten Heissgetränkeauslass (4) abgestelltes Trinkgefäss (10) detektiert, und/oder (ii) mindestens ein aus dem zweiten Heissgetränkeauslass (5) ausgebbares Heissgetränk (G3, G4), falls der mindestens eine Sensor (2, 3, 2a) ein unter dem zweiten Heissgetränkeauslass (4) abgestelltes Trinkgefäss (10) detektiert.

15. Verfahren nach Anspruch 14,
wobei eine Steuereinheit (11) einen Reinigungsbetriebsmodus des Heissgetränkeautomat (1) startet, wenn von dem mindestens einen Sensor (2, 3, 2a) detektiert wird, dass ein Reinigungsgefäss (15) auf der Trinkgefässablage (8) unterhalb einer der Heissgetränkeauslässe (4, 5) abgestellt wurde.

## Claims

1. A hot beverage machine (1) for dispensing a plurality of different hot beverages (G1, G2, G3, G4), comprising:
a first hot beverage outlet (4);
a second hot beverage outlet (5);
a beverage container tray (8) on which at least one beverage container (10) can be placed below the first hot beverage outlet (4) and/or the second hot beverage outlet (5) such that a hot beverage can be dispensed into the at least one beverage container (10) from the first and/or the second hot beverage outlet (4, 5);
a sensor unit with at least one sensor (2, 3, 2a) wherein the at least one sensor (2, 3, 2a) is designed to detect whether a beverage container (10) is placed on the beverage container tray (8) below the first hot beverage outlet (4) and/or the second hot beverage outlet (5);
a control unit (11)
and a display device (7);
**characterized in that**
the first hot beverage outlet (4) and the second hot beverage outlet (5) are designed such that at least one of the hot beverages (G1, G2) can be dispensed exclusively from the first hot beverage outlet (4) and at least one of the hot beverages (G3, G4) can be dispensed exclusively from the second hot beverage outlet (5);
wherein the at least one sensor (2, 3, 2a) is connected to the control unit (11) such that the control unit (11) can receive information as to whether the at least one sensor (2, 3, 2a) has detected a beverage container placed below the first hot beverage outlet (4) and/or the second hot beverage outlet (5), and
wherein the control unit (1) is designed to actuate the display device (7) such that the display device (7) displays: (i) at least one hot beverage (G1, G2) that can be dispensed from the first hot beverage outlet (4) if the at least one sensor (2, 3, 2a) detects a beverage container (10) placed below the first hot beverage outlet (4), and/or (ii) at least one hot beverage (G3, G4) that can be dispensed from the second hot beverage outlet (5) if the at least one sensor (2, 3, 2a) detects a beverage container (10) placed below the second hot beverage outlet (4).

2. The hot beverage machine (1) according to claim 1,
with an input device (11) for selecting a hot beverage to be dispensed, wherein only a hot beverage which is displayed by the display device (7) can be selected as the hot beverage to be dispensed.

3. The hot beverage machine (1) according to claim 1 or 2,
wherein the at least one sensor (2, 3, 2a) is designed as an ultrasonic, laser distance measuring, PMD, LIDAR, inductive or capacitive sensor.

4. The hot beverage machine (1) according to any one of claims 1 to 3,
wherein the at least one sensor (2, 3, 2a) is designed to detect for a beverage container (10) that has been put down: the size of the beverage container (10), the shape of the beverage container (10), an identification code provided on the beverage container (10) and/or the material of the beverage container (10).

5. The hot beverage machine (1) according to any one of claims 3 to 4,
wherein the control unit (11) associates the detected beverage containers (10) with groups of beverage containers, wherein the beverage containers (10) of different groups of beverage containers are each suitable and/or provided for different hot beverages.

6. The hot beverage machine (1) according to any one of claims 1 to 5,
wherein the at least one sensor (2, 3, 2a) is designed to detect whether the beverage container (10) is designed as cleaning container (15).

7. The hot beverage machine (1) according to claim 6,
with a cleaning container (15),
wherein the at least one sensor (2, 3, 2a) is designed to detect the cleaning container (15), and
wherein the control unit (11) is designed to start a cleaning operating mode of the hot beverage machine (1) when it is detected by the at least one sensor (2, 3, 2a) that the cleaning container (15) is placed on the beverage container tray (8) below the first hot beverage outlet (4) and/or the second hot beverage outlet (5).

8. The hot beverage machine (1) according to any one of claims 1 to 7,
wherein a first sensor (2) is provided which is designed to detect whether a beverage container (10) is placed below the first hot beverage outlet (4), and a second sensor (3) is provided which is designed to detect whether a beverage container (10) is placed below the second hot beverage outlet (5).

9. The hot beverage machine (1) according to any one of claims 1 to 7,
wherein the at least one sensor (2, 3, 2a) is arranged in a plane parallel to a placement plane (8.1) of the beverage container tray (8) and is designed to detect, in the plane in which the at least one sensor (2, 3, 2a) is arranged, whether a beverage container (10) is placed below the first hot beverage outlet (4) or is placed below the second hot beverage outlet (5).

10. The hot beverage machine (1) according to any of claims 1 to 9,
wherein the hot beverage machine (1) has at least one further hot beverage outlet (6), and wherein the at least one sensor (2, 3, 2a) is designed to detect whether a beverage container (10) is placed below the first and/or the second hot beverage outlet (4, 5) and/or the at least one further hot beverage outlet (6) on the beverage container tray (8) .

11. The hot beverage machine (1) according to any one of claims 1 to 10,
wherein the at least one sensor (2, 3, 2a) is arranged in such a manner that its height relative to the beverage container tray (8) is adjustable.

12. The hot beverage machine (1) according to any one of claims 1 to 11, which is designed as a fully automatic coffee machine.

13. The hot beverage machine (1) according to claim 12,
wherein the first hot beverage outlet (4) is designed as a coffee outlet and the second hot beverage outlet (5) is designed as a cappuccino outlet.

14. A method for operating a hot beverage machine (1) according to any one of claims 1 to 13,
which hot beverage machine (1) has a first hot beverage outlet (4), a second hot beverage outlet (5), a beverage container tray (8) and a display device (7) and is designed for dispensing a plurality of different hot beverages (G1, G2, G3, G4),
wherein the first hot beverage outlet (4) and the second hot beverage outlet (5) are designed in such a manner that at least one of the hot beverages (G1, G2) can be dispensed exclusively from the first hot beverage outlet (4), and at least one of the hot beverages (G3, G4) can be dispensed exclusively from the second hot beverage outlet (5),
wherein the following method steps are provided:
• detecting by the at least one sensor (2, 3, 2a) whether at least one beverage container (10) is placed on the beverage container tray (8) below the first hot beverage outlet (4) and/or the second hot beverage outlet (5);
• actuating the display device (7) by a control unit (11) in the case that a beverage container (10) is placed below the first hot beverage outlet (4) and/or the second hot beverage outlet (5) in such a manner that the display device (7) displays: (i) at least one hot beverage (G1, G2) dispensable from the first hot beverage outlet (4) if the at least one sensor (2, 3, 2a) detects a beverage container (10) placed below the first hot beverage outlet (4), and/or (ii) at least one hot beverage (G3, G4) dispensable from the second hot beverage outlet (5), if the at least one sensor (2, 3, 2a) detects a beverage container (10) placed below the second hot beverage outlet (5).

15. The method according to claim 14,
wherein a control unit (11) starts a cleaning operating mode of the hot beverage machine (1) when the at least one sensor (2, 3, 2a) detects that a cleaning container (15) has been placed on the beverage container tray (8) below one of the hot beverage outlets (4, 5).

## Revendications

1. Distributeur de boissons chaudes (1), destiné à distribuer une pluralité de différentes boissons chaudes (G1, G2, G3, G4), lequel comporte :
une première sortie de boisson chaude (4) ;
une deuxième sortie de boisson chaude (5) ;
un réceptacle pour récipient de boisson (8), sur lequel on peut poser au moins un récipient de boisson (10) sous la première sortie de boisson chaude (4) et/ou la deuxième sortie de boisson chaude (5), de telle sorte qu'à partir de la première et/ou de la deuxième sortie de boisson chaude (4, 5), une boisson chaude puisse être distribuée dans l'au moins un récipient de boisson (10) ;
une unité de capteur, pourvue d'au moins un capteur (2, 3, 2a), l'au moins un capteur (2, 3, 2a) étant conçu pour détecter si sur le réceptacle pour récipient de boisson (8), un récipient de boisson (10) est déposé sous la première sortie de boisson chaude (4) et/ou sous la deuxième sortie de boisson chaude (5) ;
une unité de commande (11)
ainsi qu'un système d'affichage (7) ;
**caractérisé en ce que**
la première sortie de boisson chaude (4) et la deuxième sortie de boisson chaude (5) sont conçues de telle sorte qu'au moins l'une des boissons chaudes (G1, G2) puisse être distribuée exclusivement à partir de la première sortie de boisson chaude (4) et qu'au moins l'une des boissons chaudes (G3, G4) puisse être distribuée exclusivement à partir de la deuxième sortie de boisson chaude (5) ;
l'au moins un capteur (2, 3, 2a) étant connecté avec l'unité de commande (11) de telle sorte que l'unité de commande (11) puisse réceptionner une information sur le fait si l'au moins un capteur (2, 3, 2a) a détecté un récipient de boisson déposé sous la première sortie de boisson chaude (4) et/ou sous la deuxième sortie de boisson chaude (5), et
l'unité de commande (11) étant conçue pour amorcer le système d'affichage (7) de telle sorte que le système d'affichage (7) affiche : (i) au moins une boisson chaude (G1, G2) susceptible d'être distribuée à partir de la première sortie de boisson chaude (4), si l'au moins un capteur (2, 3, 2a) détecte un récipient de boisson (10) déposé sous la première sortie de boisson chaude (4), et/ou (ii) au moins une boisson chaude (G3, G4) susceptible d'être distribuée à partir de la deuxième sortie de boisson chaude (5), si l'au moins un capteur (2, 3, 2a) détecte un récipient de boisson (10) déposé sous la deuxième sortie de boisson chaude (4).

2. Distributeur de boissons chaudes (1) selon la revendication 1,
pourvu d'un système de saisie (11), destiné à sélectionner une boisson chaude qui doit être distribuée, en tant que boisson chaude qui doit être distribuée étant susceptible d'être sélectionnée exclusivement une boisson chaude qui est affichée par le système d'affichage (7).

3. Distributeur de boissons chaudes (1) selon la revendication 1 ou 2,
l'au moins un capteur (2, 3, 2a) étant conçu sous la forme d'un capteur aux ultrasons, d'un capteur télémètre laser, d'un capteur PMD, d'un capteur LiDAR, d'un capteur inductif ou capacitif.

4. Distributeur de boissons chaudes (1) selon l'une quelconque des revendications 1 à 3,
l'au moins un capteur (2, 3, 2a) étant conçu pour détecter, pour un récipient de boisson (10) déposé : la taille du récipient de boisson (10), la forme du récipient de boisson (10), un code d'identification apposé sur le récipient de boisson (10) et/ou la matière du récipient de boisson (10).

5. Distributeur de boissons chaudes (1) selon l'une quelconque des revendications 3 à 4,
l'unité de commande (11) affectant les récipients de boisson (10) détectés à des groupes de récipients de boisson, les récipients de boisson (10) de différents groupes de récipients de boisson étant respectivement adaptés et/ou prévus pour différentes boissons chaudes.

6. Distributeur de boissons chaudes (1) selon l'une quelconque des revendications 1 à 5,
l'au moins un capteur (2, 3, 2a) étant conçu pour détecter si le récipient de boisson (10) est conçu sous la forme d'un récipient de nettoyage (15).

7. Distributeur de boissons chaudes (1) selon la revendication 6,
pourvu d'un récipient de nettoyage (15),
l'au moins un capteur (2, 3, 2a) étant conçu pour détecter le récipient de nettoyage (15), et l'unité de commande (11) étant conçue pour lancer un mode de nettoyage du distributeur de boissons chaudes (1) s'il est détecté par l'au moins un capteur (2, 3, 2a) que le récipient de nettoyage (15) est déposé sur le réceptacle pour récipient de boisson (8), sous la première sortie de boisson chaude (4) et/ou sous la deuxième sortie de boisson chaude (5).

8. Distributeur de boissons chaudes (1) selon l'une quelconque des revendications 1 à 7,
un premier capteur (2) étant prévu, qui est conçu pour détecter si un récipient de boisson (10) est déposé sous la première sortie de boisson chaude (4), et un deuxième capteur (3) étant prévu, qui est conçu pour détecter si un récipient de boisson (10) est déposé sous la deuxième sortie de boisson chaude (5).

9. Distributeur de boissons chaudes (1) selon l'une quelconque des revendications 1 à 7,
l'au moins un capteur (2, 3, 2a) étant placé dans un plan parallèle à un plan de dépose (8.1) du réceptacle pour récipient de boisson (8) et étant conçu pour détecter, dans le plan dans lequel est placé l'au moins un capteur (2, 3, 2a), si un récipient de boisson (10) est déposé sous la première sortie de boisson chaude (4) ou sous la deuxième sortie de boisson chaude (5).

10. Distributeur de boissons chaudes (1) selon l'une quelconque des revendications 1 à 9,
le distributeur de boissons chaudes (1) comportant au moins une sortie de boisson chaude (6) supplémentaire, et l'au moins un capteur (2, 3, 2a) étant conçu pour détecter si un récipient de boisson (10) est déposé sur le réceptacle pour récipient de boisson (8), sous la première et/ou sous la deuxième sortie de boisson chaude (4, 5) et/ou sous l'au moins une sortie de boisson chaude (6) supplémentaire.

11. Distributeur de boissons chaudes (1) selon l'une quelconque des revendications 1 à 10,
l'au moins un capteur (2, 3, 2a) étant placé de telle sorte que sa hauteur soit réglable par rapport au réceptacle pour récipient de boisson (8).

12. Distributeur de boissons chaudes (1) selon l'une quelconque des revendications 1 à 11, lequel est conçu sous la forme d'un distributeur automatique de café.

13. Distributeur de boissons chaudes (1) selon la revendication 12,
la première sortie de boisson chaude (4) étant conçue sous la forme d'une sortie pour café et la deuxième sortie de boisson chaude (5) étant conçue sous la forme d'une sortie pour cappuccino.

14. Procédé opérationnel d'un distributeur de boissons chaudes (1) selon l'une quelconque des revendications 1 à 13,
lequel distributeur de boissons chaudes (1) comporte une première sortie de boisson chaude (4), une deuxième sortie de boisson chaude (5), un réceptacle pour récipient de boisson (8) et un système d'affichage (7) et étant conçu pour distribuer une pluralité de différentes boissons chaudes (G1, G2, G3, G4),
la première sortie de boisson chaude (4) et la deuxième sortie de boisson chaude (5) étant conçues de telle sorte qu'au moins l'une des boissons chaudes (G1, G2) puisse être distribuée exclusivement à partir de la première sortie de boisson chaude (4) et qu'au moins l'une des boissons chaudes (G3, G4) puisse être distribuée exclusivement à partir de la deuxième sortie de boisson chaude (5),
les étapes de procédé suivantes étant prévues :
• la détection par l'au moins un capteur (2, 3, 2a) si on dépose au moins un récipient de boisson (10) sur le réceptacle pour récipient de boisson (8), sous la première sortie de boisson chaude (4) et/ou sous la deuxième sortie de boisson chaude (5) ;
• l'amorçage du système d'affichage (7) par une unité de commande (11) dans le cas où on dépose un récipient de boisson (10) sous la première sortie de boisson chaude (4) et/ou sous la deuxième sortie de boisson chaude (5), de telle sorte que le système d'affichage (7) affiche : (i) au moins une boisson chaude (G1, G2) susceptible d'être distribuée à partir de la première sortie de boisson chaude (4) si l'au moins un capteur (2, 3, 2a) détecte un récipient de boisson (10) déposé sous la première sortie de boisson chaude (4), et/ou (ii) au moins une boisson chaude (G3, G4) susceptible d'être distribuée à partir de la deuxième sortie de boisson chaude (5) si l'au moins un capteur (2, 3, 2a) détecte un récipient de boisson (10) déposé sous la deuxième sortie de boisson chaude (5).

15. Procédé selon la revendication 14,
l'unité de commande (11) lançant un mode de nettoyage du distributeur de boissons chaudes (1) s'il est détecté par l'au moins un capteur (2, 3, 2a) qu'un récipient de nettoyage (15) a été déposé sur le réceptacle pour récipient de boisson (8), en-dessous de l'une des sorties de boisson chaude (4, 5).
